# EUROPEAN PATENT SPECIFICATION

(11) **EP 2 246 225 B1**
(45) Date of publication and mention of the grant of the patent: **24.09.2014**
(21) Application number: 09710301.4
(22) Date of filing: 12.02.2009
(51) Int. Cl.: B60R 22/46

(54) **SEAT BELT RETRACTOR**
SICHERHEITSGURTAUFROLLER
RÉTRACTEUR DE CEINTURE DE SÉCURITÉ

(30) Priority: 15.02.2008 JP 2008034762
(43) Date of publication of application: 03.11.2010
(73) Proprietor: Autoliv Development AB, 447 83 Vårgårda (SE)
(72) Inventor: NAGATOMO, Junichi, Yokohama-shi Kanagawa 222-0033 (JP); MAEMURA, Eiji, Yokohama-shi Kanagawa 222-0033 (JP)
(74) Representative: Müller Verweyen
(86) International application number: PCT/JP2009/052340
(87) International publication number: WO 2009/101992

(56) References cited:
- WO-A1-2006/123750
- JP-A- 2007 314 058

## Description

### TECHNICAL FIELD

The present invention relates to a seat belt retractor, and more particularly to a seat belt retractor including an electric actuator and an explosive pretensioner.

### BACKGROUND ART

A seat belt retractor according to the preamble of claim 1 is disclosed in WO 2006/123750A1.

In a conventional seat belt retractor, a sensor detects that a vehicle is in a state of rapid deceleration, whereupon a spindle is rotated in a retraction direction by a motor. When the possibility of a collision exists, a seat belt (webbing) is retracted by a fixed amount so that an occupant is lightly restrained, and when a collision occurs, the seat belt is retracted forcibly by operating an explosive pretensioner, whereby the occupant is held securely (see Patent Document 1, for example).

In the seat belt retractor described in Patent Document 1, when an explosive pretensioner is operated in a power transmission mechanism for transmitting power from an electric actuator to a spindle, a motor is rotated in reverse. Accordingly, an engagement between a final gear and a pawl is released such that power transmission from the motor to the spindle is interrupted, and as a result, the pretensioner prevents the motor from applying a load during unwinding of the seat belt.
Patent Document 1: Japanese Patent Application Publication No. 2002-326558

In the seat belt retractor described in Patent Document 1, when the explosive pretensioner is operated, the motor is caused to rotate in reverse, thereby releasing the engagement between the final gear and the pawl. In a constitution where an engagement between a final gear and a pawl is released by a motor, it may be impossible to perform the release operation accurately in response to a rapid collision or the like. Furthermore, time may be required to start the motor and perform the release operation. Moreover, the attitude of the pawl following release has not been taken into consideration.

### DISCLOSURE OF THE INVENTION

The present invention has been designed in consideration of the circumstances described above, and an object thereof is to provide a seat belt retractor that includes a small number of components and can perform a reliable clutch operation even when an explosive pretensioner is operated.

The above object of the present invention is achieved by the following constitutions.
(1) A seat belt retractor including:
   a spindle for retracting a seat belt;
   an electric actuator that generates a power for rotating the spindle;
   an explosive pretensioner that acts on the spindle to retract the seat belt; and
   a power transmission mechanism that is capable of transmitting the power from the electric actuator to the spindle and capable of blocking power transmission from the electric actuator to the spindle when the pretensioner is operated,
   wherein the power transmission mechanism includes:
      a rotary member that rotates together with the spindle and has an engaged portion on a peripheral surface thereof;
      an engagement member that has an engagement portion capable of engaging with the engaged portion of the rotary member and is capable of rotating such that the engagement portion moves to a first position when the electric actuator is not operative, moves to a second position in which the engagement portion engages with the engaged portion of the rotary member when the electric actuator is operated, and moves to a third position on an opposite side of the first position to the second position in a radial direction when the pretensioner is operated; and
      a return preventing mechanism that prevents the engagement portion from returning to the first position and the second position after moving to the third position.
(2) The seat belt retractor according to (1), wherein the return preventing mechanism includes:
   a projecting portion provided on the engagement member; and
   a spring member which, when the pretensioner is operated such that the engagement portion moves from the second position past the first position to the third position, is elastically deformed by the projecting portion of the engagement member when the engagement member passes the first position and elastically returned when the engagement portion moves to the third position.
(3) The seat belt retractor according to (2), wherein the power transmission mechanism includes:
   a final gear that is rotated by the power from the electric actuator;
   a plate member fixed to the final gear;
   a guide portion provided on the plate member to guide rotation of the engagement member;
   an engagement member rotary shaft that holds the engagement member rotatably; and
   an engagement member holder that engages the engagement member rotary shaft rotatably and is held on a non-driven part of a case member by a biasing force thereof so as to be capable of holding the engagement member,
   the projecting portion is provided on an opposite side face of the engagement member to a side face on which the engagement member rotary shaft is provided,
   a through hole through which the projecting portion projects is formed in the plate member and has a length that allows the projecting portion to move when the engagement portion rotates between the second position and the third position, and
   the spring member is attached to the plate member such that a tip end portion thereof opposes the through hole when seen from an axial direction, whereby the spring member is capable of contacting the projecting portion when the engagement portion moves from the first position to the third position.
(4) The seat belt retractor according to (3), wherein when the power of the electric actuator begins to be transmitted in a direction for retracting the seat belt, the engagement member rotary shaft is moved in an opposite direction relative to the direction for retracting the seat belt by the engagement member holder held on the non-driven part of the case member by the biasing force.

In the seat belt retractor according to the present invention, the power transmission mechanism includes the rotary member that rotates together with the spindle and has an engaged portion on a peripheral surface thereof; the engagement member that has an engagement portion capable of engaging with the engaged portion of the rotary member and is capable of rotating such that the engagement portion moves to a first position when the electric actuator is not operative, moves to a second position in which the engagement portion engages with the engaged portion of the rotary member when the electric actuator is operated, and moves to a third position on an opposite side of the first position to the second position in a radial direction when the pretensioner is operated; and the return preventing mechanism that prevents the engagement portion from returning to the first position and the second position after moving to the third position. Thus, a reliable clutch operation during which the engagement portion of the engagement member does not re-engage with the engaged portion of the rotary member after the pretensioner is operated can be achieved using a small number of components.

### BRIEF DESCRIPTION OF THE DRAWINGS

Fig. 1 is an exploded perspective view showing a part of a seat belt retractor according to the present invention;
Fig. 2 is an exploded perspective view showing a remaining part of the seat belt retractor according to the present invention;
Fig. 3 is a schematic diagram showing a pretensioner of Fig. 2;
Fig. 4 is a schematic diagram showing operation states of the pretensioner, Fig. 4 (a) showing a pre-operation state, Fig. 4(b) showing a state in which an engagement between a rocking lever and a pretension ring is released at the start of an operation, and Fig. 4(c) showing a post-operation state in which a lock piece is engaged with the pretension ring;
Fig. 5 is a sectional view showing an internal constitution of a gear case of Fig. 1;
Fig. 6 is a view illustrating a disengaged state of a clutch for transmitting power from a motor;
Fig. 7 is a view illustrating a semi-engaged state of the clutch for transmitting power from the motor;
Fig. 8 is a view illustrating an engaged state of the clutch for transmitting power from the motor;
Fig. 9 is a view illustrating a state in which the pretensioner is operated such that a pawl is flicked;
Fig. 10 is a view illustrating a state in which the pawl rotates during an operation of the pretensioner;
Fig. 11 is a view illustrating a state in which the pawl has stopped rotating during the operation of the pretensioner; and
Fig. 12 is a view illustrating a state in which the operation of the pretensioner is complete and rotation of the pawl is prevented by an off-spring.

### EXPLANATION OF REFERENCE NUMERALS

- 10: seat belt retractor
- 12: spindle
- 19: power transmission mechanism
- 34: motor (electric actuator)
- 42: friction spring (engagement member holder)
- 46: ring plate (plate member)
- 48: pawl rotary shaft (engagement member rotary shaft)
- 49: pawl (engagement member)
- 49c: engagement portion
- 49d: through hole
- 50: latch ring (rotary member)
- 50a: external teeth (engaged portion)
- 52: off-spring (spring member)
- 53: projecting portion
- 61: clutch

### BEST MODE FOR CARRYING OUT THE INVENTION

A seat belt retractor according to an embodiment of the present invention will be described in detail below with reference to the drawings.

### (First Embodiment)

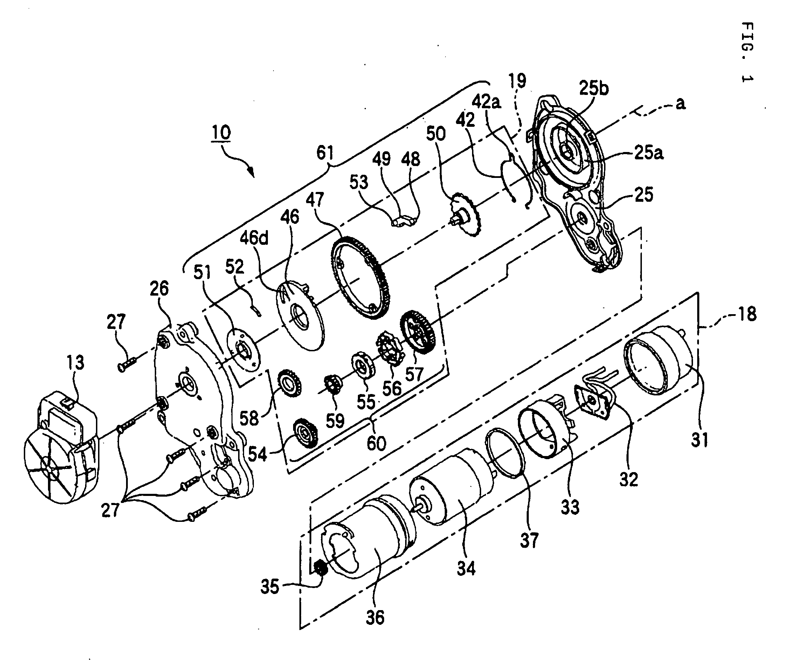

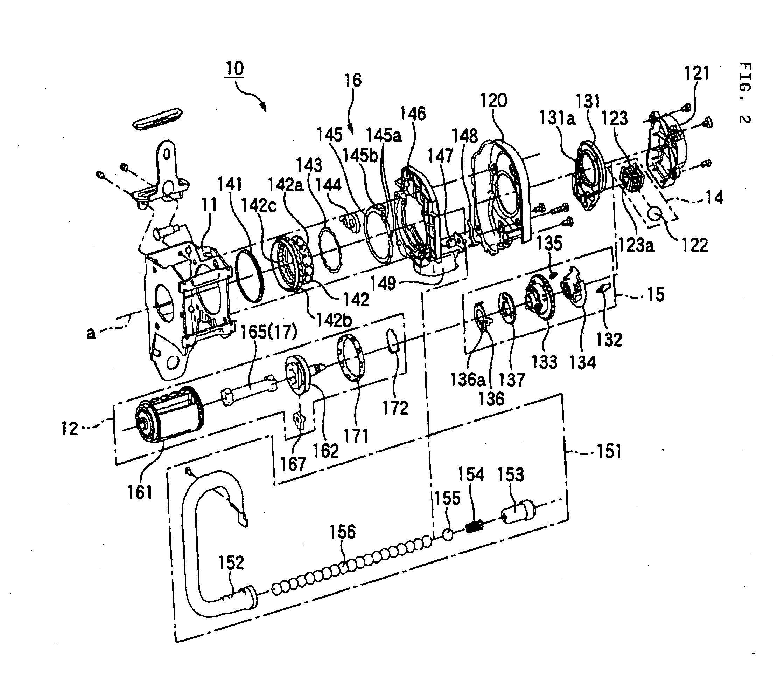

As shown in Figs. 1 and 2, a seat belt retractor 10 according to the first embodiment includes a spindle assembly 12 that is supported rotatably on a retractor frame 11 to retract a seat belt (not shown), a retraction spring device 13 that biases the spindle assembly 12 in a retraction direction of the seat belt, an acceleration sensor 14 that detects horizontal direction acceleration in a vehicle, a lock mechanism 15 that locks an unwinding operation of the seat belt in accordance with the acceleration detected by the acceleration sensor 14, an explosive pretensioner 16 that acts on the spindle assembly 12 to retract the seat belt during a vehicle collision, a force limiter mechanism 17 that unwinds the seat belt while absorbing energy when a load that is equal to or greater than a set load acts on the seat belt, a motor 34 serving as an electric actuator that generates power for rotating the spindle assembly 12, and a power transmission mechanism 19 capable of transmitting power from the motor 34 to the spindle assembly 12. Note that axes a shown in Figs. 1 and 2 are identical.

The retraction spring device 13 and the power transmission mechanism 19 are disposed on one axial direction end side of the spindle assembly 12 and attached to the retractor frame 11. Meanwhile, the acceleration sensor 14, lock mechanism 15, and pretensioner 16 are disposed on the other axial direction end side of the spindle assembly 12 and housed in a drive cover 120 and a system cover 121 attached to the retractor frame 11. Further, a motor assembly 18 including the motor 34 is attached to the retractor frame 11 below the spindle assembly 12.

The acceleration sensor 14 includes a spherical sensor weight 122 and a sensor case 123 housing the sensor weight 122, and a sensor lever 123a is attached rotatably to the sensor case 123.

Various known constitutions may be employed in the lock mechanism 15. In this embodiment, the lock mechanism 15 includes a WS lever 132 that is supported rotatably between a bearing plate 131 and the system cover 121 to be capable of engaging with internal teeth 131a of the bearing plate 131 in response to an operation of an inertial body 134, a steering wheel 133 that engages with the WS lever 132, the inertial body 134, which is disposed in the steering wheel 133, a spring 135 provided between the steering wheel 133 and the inertial body 134, and a ratchet wheel 137 that is attached to the steering wheel 133 integrally by a steering disk 136.

When the horizontal direction acceleration exceeds a predetermined value due to a vehicle collision or the like, the sensor weight 122 of the acceleration sensor 14 moves, causing the sensor lever 123a to rotate upward. When the sensor lever 123a moves upward, it engages with the steering wheel 133. When the seat belt is unwound from the retractor 10 in a state where the steering wheel 133 is prevented from rotating in an unwinding direction, a rotation delay occurs in the steering wheel 133 relative to the spindle assembly 12. As a result, a lock piece 167 to be described below, which is attached rotatably to the steering wheel 133, moves radially outward so as to engage with a pretension ring 142 in a non-rotatable state, to be described below, and therefore a seat belt unwinding operation performed by the spindle assembly 12 is locked.

The pretensioner 16 includes a large diameter ring 141, the pretension ring 142, a small diameter ring 143, a rocking lever 144, a synchro ring 145, a distance plate 146, a pin guide spacer 147, a lever member 148, and a ball stop 149, all of which are provided between the retractor frame 11 and the drive cover 120, and a driving device 151 is provided in the pretensioner 16 on the periphery of the pretension ring 142.

The driving device 151 includes a pipe housing 152 attached to the retractor frame 11, and a gas generator 153, a spring 154, a piston 155, and balls 156 serving as weight bodies, which are provided in the pipe housing 152. When the gas generator 153 is ignited, leading to an increase in gas pressure, the balls 156 are pushed out via the piston 155 such that the balls 156 enter groove portions in the pretension ring 142, thereby causing the pretension ring 142 to rotate. Note that the spring 154 prevents noise from occurring due to rattling of the balls 156 in a normal state.

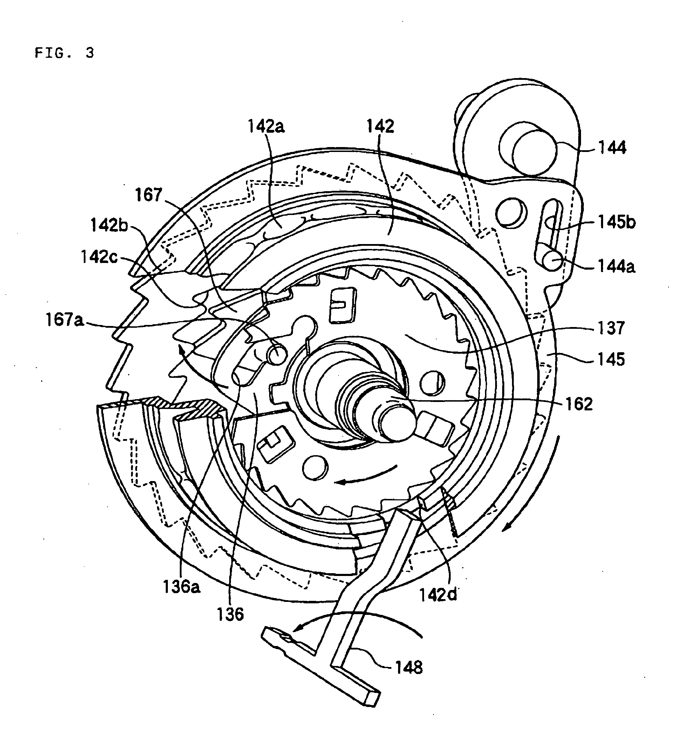

The pretension ring 142 is supported rotatably between the retractor frame 11 and the drive cover 120 by the large diameter ring 141 and the small diameter ring 143. Groove portions 142a in which the balls 156 of the driving device 151 are accommodated and external teeth 142b that are capable of meshing with the rocking lever 144 and latching a pawl portion 145a formed inwardly on the periphery of the synchro ring 145 are formed on an outer peripheral side of the pretension ring 142. Further, internal teeth 142c capable of meshing with the lock piece 167 are formed on an inner peripheral side of the pretension ring 142. Furthermore, a window hole 142d (see Fig. 3) that guides the lever member 148 inserted therein is formed on a side face of the pretension ring 142.

A projecting portion 144a (see Fig. 3) is formed on a side face of the rocking lever 144, and this projecting portion is guided into a cam hole 145b in the synchro ring 145. The rocking lever 144 engages and releases the external teeth 142b when the synchro ring 145 is rotated by the rotation of the pretension ring 142, and when the rocking lever 144 meshes with the external teeth 142b, rotation of the pretension ring 142 in a belt unwinding direction is halted.

When an operation current is received in the pretensioner 16 from the vehicle side, the gas generator 153 of the driving device 151 is ignited, leading to an increase in gas pressure, and as a result, the balls 156 move within the pipe housing 152. The moving balls 156 enter the groove portions 142a in the pretension ring 142 from the pipe housing 152, causing the pretension ring 142 to rotate.

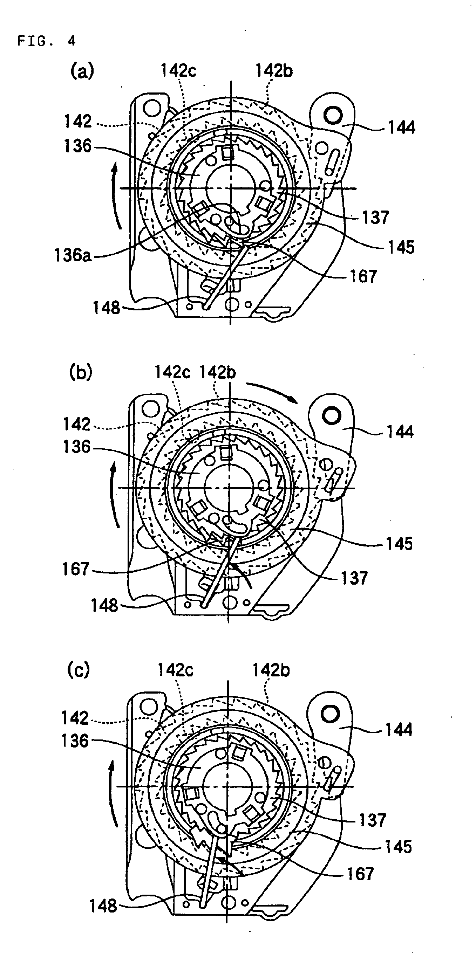

When the pretension ring 142 rotates, the rocking lever 144 engaged with the external teeth 142b is flicked outward from the state shown in Fig. 4(a). Simultaneously, the projecting portion 144a of the rocking lever 144 pulls the cam hole 145b around such that the synchro ring 145 rotates (see Fig. 4(b)). Thereafter, the rocking lever 144 impinges on a cut and raised plate (not shown) provided on the retractor frame 11 so as to stop rotating, and accordingly the synchro ring 145 stops rotating via the cam hole 145b that guides the projecting portion 144a.

Note, however, that the pawl portion 145a formed on the synchro ring 145 is ratchet-engaged to the external teeth 142b of the pretension ring 142 to allow the pretension ring 142 to rotate, and therefore the pretension ring 142 continues to rotate while flicking the pawl portion 145a with the external teeth 142b.

Further, when the pretension ring 142 rotates, the lever member 148 guided by the window hole 142d rotates, and as a result, a tip end of the lever member 148 meshes with the ratchet wheel 137.

When the pretension ring 142 rotates further such that the lever member 148 also rotates further, the ratchet wheel 137 and the steering disk 136 are caused to rotate. Note that in this state, no force is transmitted to a tread head 162.

Hence, the lock piece 167, which is supported in the cam hole 136a of the steering disk 136 by a pin 167a (see Fig. 3), is driven by the rotation of the steering disk 136 while being guided by the tread head 162, and as a result, the lock piece 167 meshes with the internal teeth 142c of the pretension ring 142 (see Fig. 4(c)).

Further, when the pretension ring 142 is pushed by the balls 156 so as to rotate, since the lock piece 167 is meshed to the internal teeth 142c of the pretension ring 142, the rotation of the pretension ring 142 is transmitted to a spindle 161 via the tread head 162 and a torsion bar 165, and as a result, the seat belt, which is fixed to the spindle 161, is retracted. Thus, the pretensioner 16 is operated.

Further, the spindle assembly 12 includes the spindle 161, the tread head 162, which blocks an opening in one end side of the spindle 161, the torsion bar 165, which is fitted to the spindle 161 and the tread head 162 at respective ends thereof to act as the force limiter mechanism 17, and the lock piece 167, which is guided by an outer peripheral surface of the tread head 162. Note that in Fig. 2, a reference numeral 171 denotes a drum ring and a reference numeral 172 denotes an omega spring.

After halting rotation of the pretension ring 142 in the unwinding direction, the force limiter mechanism 17 rotates the spindle 161 such that the seat belt is unwound by twisting the torsion bar 165.

More specifically, when the balls 156 of the pretensioner 16 stop moving such that the spindle 161 stops rotating in the retraction direction, the belt is unwound due to a forward movement of an occupant. When the pretension ring 142 rotates in the belt unwinding direction, the synchro ring 145 rotates integrally therewith since the pawl portion 145a of the synchro ring 145 is engaged with the external teeth 142b of the pretension ring 142. At this time, the cam hole 145b formed in the synchro ring 145 pushes the projecting portion 144a of the rocking lever 144 such that the rocking lever 144 is led inward, and as a result, the rocking lever 144 engages with the external teeth 142b of the pretension ring 142. Accordingly, unwinding direction rotation of the pretension ring 142 is stopped.

Further, when force is applied in the belt unwinding direction such that a belt load reaches a torsion load of the torsion bar 165, the torsion bar 165 twists while undergoing plastic deformation, thereby causing the spindle 161 to rotate such that the seat belt is unwound.

Further, a lower cover 25 and an upper cover 26 serving as a case member are attached to an axial direction other side of the retractor frame 11 by a screw 27. A space for accommodating the power transmission mechanism 19 is formed between the lower cover 25 and the upper cover 26 attached thereto.

The motor assembly 18, which is positioned below the lower cover 25 or in other words under the retractor frame 11, is constituted by a rear cap 31, a printed board 32, a rear case 33, a motor 34, an O ring 37, a first gear 35, and a front case 36. Note that the first gear 35 is attached to a rotary shaft of the motor 34 and inserted into the interior of the lower cover 25 so as to mesh with a second gear 54 of a torque limiter mechanism 60 provided in the power transmission mechanism 19.

The torque limiter mechanism 60 includes a third small gear 59 that meshes with a fourth gear 58, a spring holder 55 attached to the third small gear 59 to be capable of rotating integrally therewith, a plurality of limit springs 56 held by the spring holder 55, and a third large gear 57 disposed coaxially with the third small gear 59 to mesh with the second gear 54. The limit springs 56 are held by the spring holder 55 such that one end portion thereof is engaged to a concavo-convex surface (not shown) formed on an inner peripheral surface of the third large gear 57. Thus, when the limit springs 56 elastically deform, the third large gear 57 is permitted to rotate relative to the third small gear 59.

Hence, in a normal state of the torque limiter mechanism 60, the third large gear 57 and third small gear 59 rotate in an identical direction while a relative phase is maintained therebetween by the limit springs 56. Here, when the motor 34 is driven to retract the seat belt and a torque difference that is larger than a predetermined value occurs between the third large gear 57 and the third small gear 59 due to a light collision or a braking operation during which the pretensioner mechanism 15 does not operate, the engagement between the end portion of the limit springs 56 and the concavo-convex surface of the third large gear 57 is released, whereby the limit springs 56 begin to slide while deforming elastically. As a result, excessive torque transmission by the motor 34 can be suppressed, damage to the gear teeth can be prevented, and the effect on a restraining performance during an energy absorption operation can be reduced. Note that in this embodiment, the first gear 35, second gear 54, third small gear 59, third large gear 57, fourth gear 58, and a final gear 47 to be described below together constitute a gear assembly.

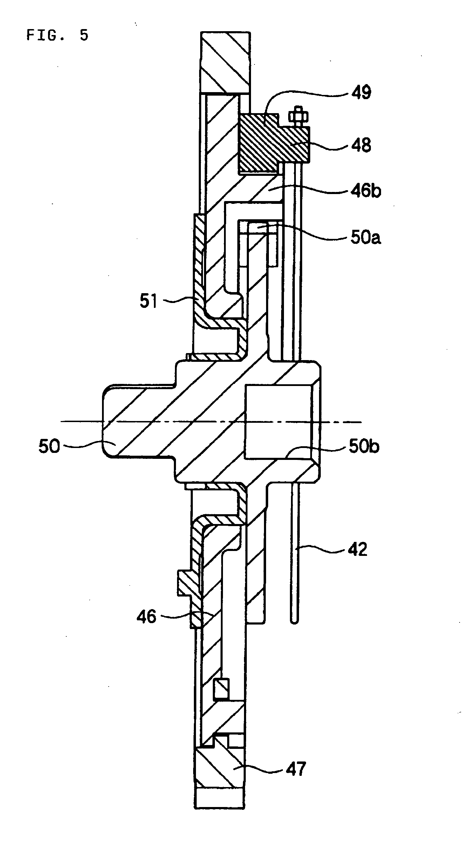

Further, a clutch 61 constituting the power transmission mechanism 19 is housed in an upper portion of a space between the lower cover 25 and the upper cover 26. As shown in Figs. 1 and 5, the clutch 61 is constituted by a friction spring 42 serving as an engagement member holder, a ring plate 46 serving as a plate member, the final gear 47, a pawl 49 serving as an engagement member, a pawl rotary shaft 48 serving as an engagement member rotary shaft, a latch ring 50 serving as a rotary member, a bush 51, and an off-spring 52 serving as a spring member.

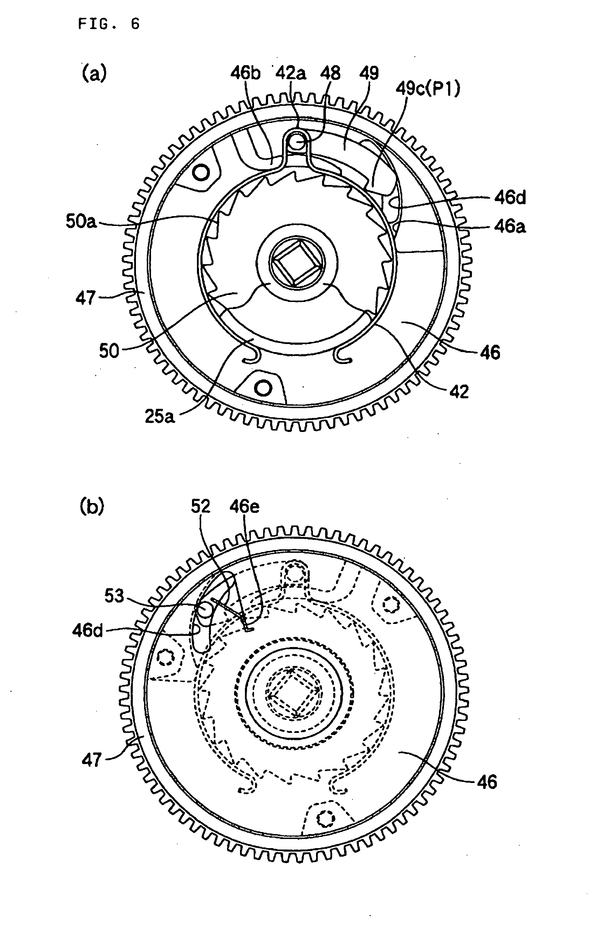

The latch ring 50 is coupled to the spindle assembly 12 by internal teeth 50b (see Fig. 5) so as to rotate integrally with the spindle assembly 12, and external teeth 50a serving as an engaged portion are formed on an outer peripheral surface of the latch ring 50 (see Fig. 6).

The final gear 47 is disposed coaxially with the latch ring 50 and gear-coupled to the rotary shaft of the motor 34. Further, the ring plate 46 is attached to the final gear 47 to rotate integrally with the final gear 47.

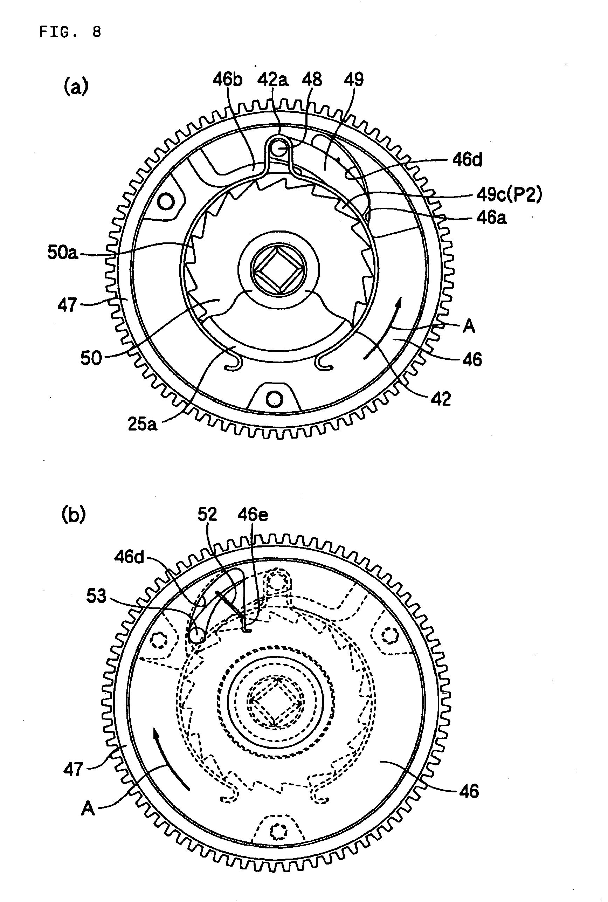

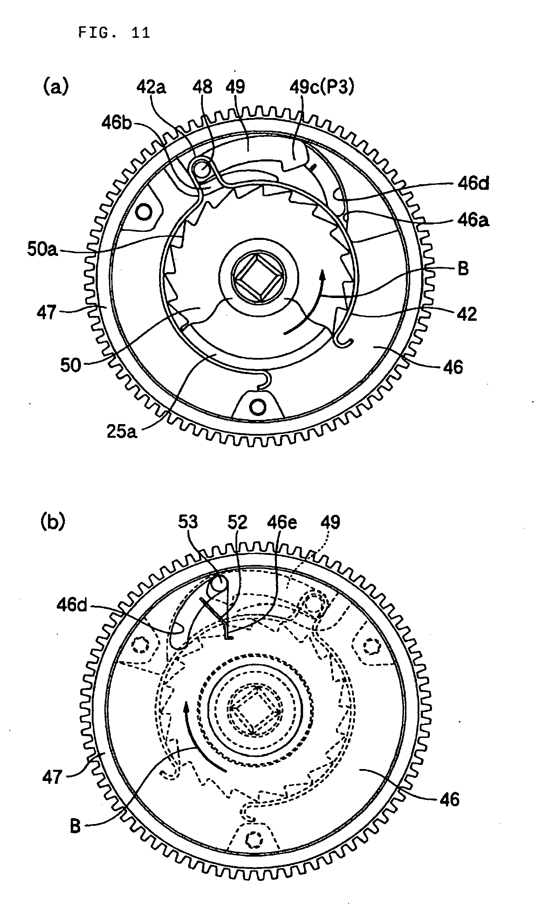

The pawl 49 is formed integrally with the pawl rotary shaft 48, which is provided in an intermediate portion thereof, and rotates about the rotary shaft 48. Further, an engagement portion 49c that engages with the external teeth 50a of the latch ring 50 is provided on a tip end of the pawl 49 (see Fig. 6). The pawl 49 is capable of rotating such that the engagement portion 49c moves to a first position P1 when the motor 34 is not operative, moves to a second position P2 (see Fig. 8) in which the engagement portion 49c engages with the external teeth 50a of the latch ring 50 when the motor 34 is operated, and moves to a third position P3 (see Fig. 11) on an opposite side of the first position P1 to the second position P2 in a radial direction when the pretensioner 16 is operated. Furthermore, a projecting portion 53 is provided on the pawl 49 on an opposite side face to the side face on which the pawl rotary shaft 48 is provided and closer to the engagement portion 49c than the rotary shaft 48.

The friction spring 42 takes a substantially ring-shaped form in which both ends are partially open, and is held in contact with an outer peripheral surface of a convex portion 25a formed on the lower cover 25 as a non-driven part by biasing the convex portion 25a in a rotary shaft center direction of the spindle assembly 12 using its own biasing force. Hence, when the friction spring 42 receives a rotary direction force, a frictional force is generated in an opposite direction to the rotary direction between the friction spring 42 and the convex portion 25a of the lower cover 25, and as a result, circumferential direction movement of the friction spring 42 relative to the ring plate 46 is restricted. The convex portion 25a projects in an axial direction from the case side face and is formed concentrically with a central hole 25b to which the latch ring 50 is attached.

A shaft engagement portion 42a that engages with the pawl rotary shaft 48 is formed in an intermediate part of the friction spring 42 by being bent into a projecting shape that surrounds the pawl rotary shaft 48.

Further, a cam surface 46a serving as a guide portion for guiding a tip end outer peripheral surface of the pawl 49 on the engagement portion 49c side radially inward is formed in a part of the circumferential direction of the ring plate 46, and a release surface 46b for guiding an inner peripheral surface of the pawl 49 is formed opposite the cam surface 46a. The cam surface 46a is constituted by a bent wall surface that contacts the tip end outer peripheral surface of the pawl 49 when the engagement portion 49c engages with the external teeth 50a of the latch ring 50. The release surface 46b is constituted by a wall surface that contacts the inner peripheral surface of the pawl 49 when the engagement between the engagement portion 49c and the external teeth 50a is released. Further, the release surface 46b is long enough to be able to continue guiding the pawl 49 following a pretensioner operation.

Hence, in a predetermined angle range extending from a point at which the final gear 47 begins to rotate in the seat belt retraction direction to a point at which the engagement portion 49c of the pawl 49 engages with the engaged portion 50a of the latch ring 50, the friction spring 42 restricts co-rotation of the pawl 49 with the final gear 47, and instead the pawl 49 rotates while being guided by the cam surface 46a of the rotating ring plate 46 so as to engage with the engagement portion 50a of the latch ring 50.

Once the final gear 47 has rotated in the seat belt retraction direction beyond the predetermined angle range such that the engagement portion 49c of the pawl 49 is engaged with the engaged portion 50a of the latch ring 50, the final gear 47, the ring plate 46, the friction spring 42 and the pawl 49 rotate integrally.

Further, a through hole 46d through which the projecting portion 53 of the pawl 49 projects is formed in the ring plate 46 in the vicinity of the cam surface 46a. A length of the through hole 46d is set to allow the projecting portion 53 to move when the engagement portion 49c of the pawl 49 rotates between the second position P2 and the third position P3.

Furthermore, the off-spring 52 is attached to an opposite side face of the ring plate 46 to the side face on which the cam surface 46a and the release surface 46b are formed such that a tip end portion thereof faces the through hole 46d when seen from the axial direction.

Hence, when the pretensioner 16 is operated such that the engagement portion 49c of the pawl 49 moves from the second position P2 past the first position P1 to the third position P3, the off-spring 52 impinges on the projecting portion 53 of the pawl 49, whereby the off-spring 52 is elastically deformed by the projecting portion 53 when the projecting portion 53 passes the first position P1 and elastically returned when the engagement portion 49c moves to the third position P3. The engagement portion 49c is prevented from returning to the first position P1 and the second position P2 after moving to the third position P3. Note that the projecting portion 53 of the pawl 49 and the off-spring 52 constitute a return prohibiting mechanism according to the present invention.

Next, an operation of the seat belt retractor 10 according to this embodiment will be described. When the possibility of a collision is detected by a monitoring sensor or the like, not shown in the drawings, the motor 34 is driven before the collision by an ECU, not shown in the drawings, whereby the spindle assembly 12 is rotated via the power transmission mechanism 19 such that the seat belt is retracted. When the possibility of a collision disappears, the motor 34 is rotated in reverse to return to the pre-collision state. During a collision, on the other hand, the pretensioner 16 is operated to disengage the clutch 61 mechanically, whereby the seat belt is forcibly retracted.

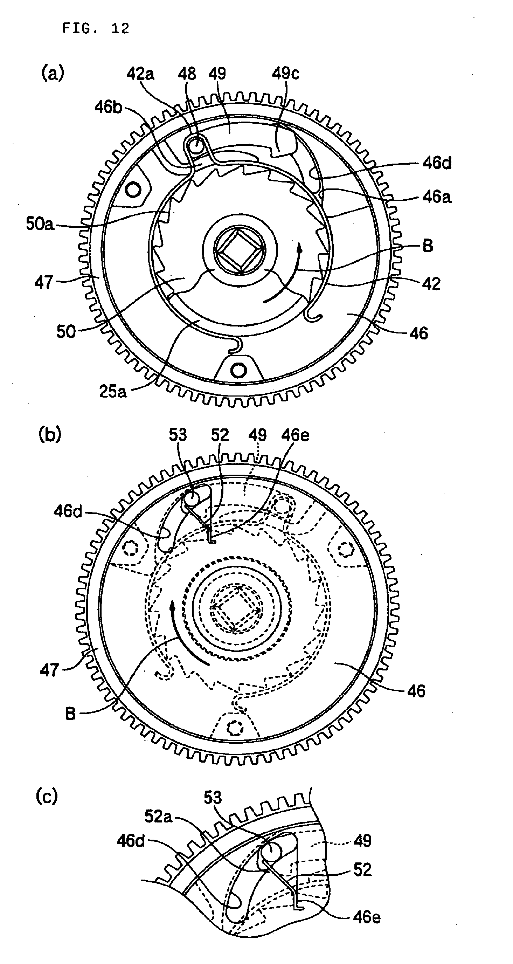

An operation of the clutch 61 will now be described with reference to Figs. 6 to 12.

First, as shown in Fig. 6, when seat belt retraction is not performed by the motor 34, the pawl rotary shaft 48 is engaged by the engagement portion 42a of the friction spring 42 and the pawl 49 is guided by the release surface 46b such that the engagement portion 49c is positioned far from the latch ring 50. Accordingly, the latch ring 50 and the pawl 49 are not engaged (first position P1). Therefore, only the latch ring 50 formed integrally with the spindle 11 is capable of rotating, and the seat belt can be retracted and unwound normally.

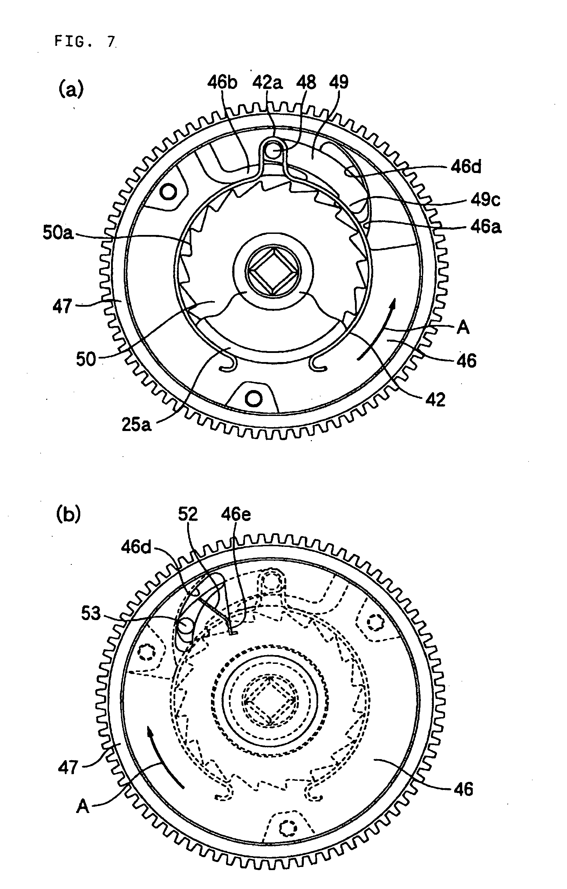

As shown in Fig. 7, when the motor 34 rotates to a retraction side, the final gear 47 gear-coupled to the rotary shaft of the motor 34 rotates in a counter-clockwise direction (see arrow A in Fig. 7). At this time, the pawl 49 formed integrally with the rotary shaft 48 is biased by the friction spring 42, and therefore the pawl 49 attempts to stay in place. Accordingly, the pawl rotary shaft 48 moves relative to the final gear 47 in an opposite direction relative to the seat belt retraction direction.

Meanwhile, the end plate 46 having the cam surface 46a rotates together with the final gear 47, and therefore the pawl 49 rotates about the rotary shaft 48 in a rotation center direction over the cam surface 46a.

As shown in Fig. 8, when the final gear 47 rotates by a predetermined angle, the engagement portion 49c of the pawl 49 engages fully with the external teeth 50a of the latch ring 50 (second position P2).

When the final gear 47 rotates beyond the predetermined angle in the seat belt retraction direction, the final gear 47, the ring plate 46, the friction spring 42 and the pawl 49 rotate integrally while the engagement portion 49c of the pawl 49 remains engaged with the external teeth 50a of the latch ring 50, and as a result, power from the electric actuator is transmitted to the spindle assembly 12.

Note that when the motor 34 rotates to a release side, the final gear 47 rotates clockwise. In this case, the pawl 49 is guided by the release surface 46b formed on the ring plate 46 such that the engagement portion 49c of the pawl 49 is separated from the external teeth 50a of the latch ring 50 and pushed back to its original position.

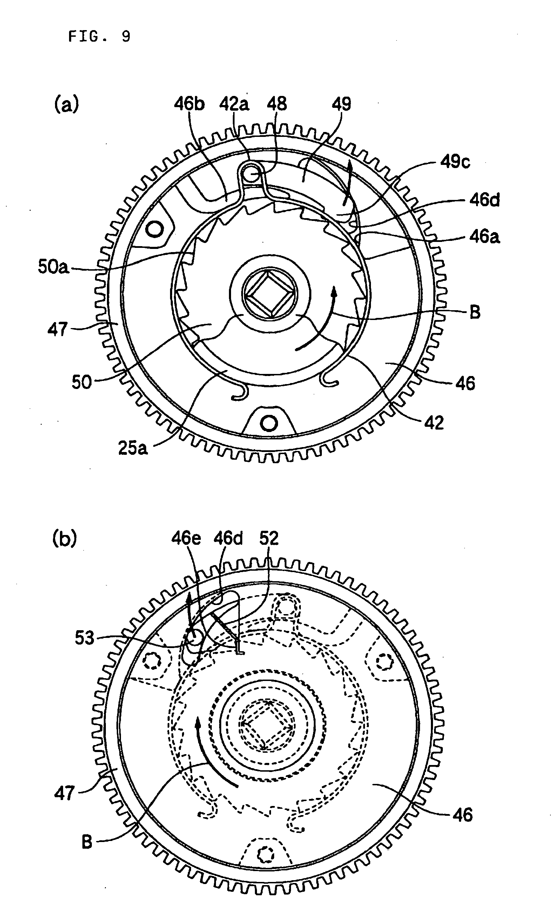

Meanwhile, as shown in Fig. 9, when the pretensioner 16 is operated while the engagement portion 49c of the pawl 49 is engaged with the external teeth 50a of the latch ring 50, the latch ring 50 rotates at high speed in the retraction direction (see arrow B in Fig. 9), whereby the engagement portion 49c of the pawl 49 is flicked radially outward. At this time, the pawl 49 rotates over the cam surface 46a formed on the ring plate 46.

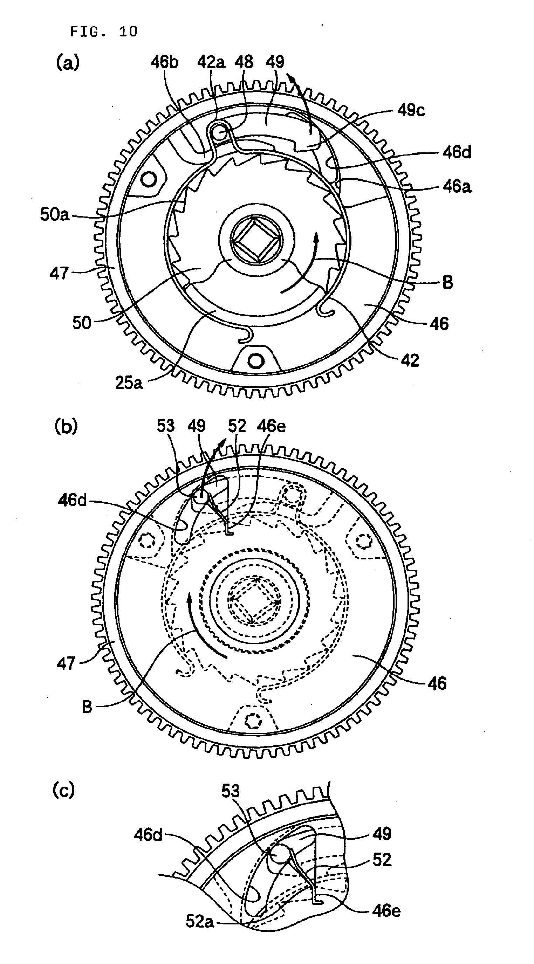

Then, as shown in Fig. 10, the projecting portion 53 of the pawl 49 elastically deforms the off-spring 52 attached to the ring plate 46 about a deformation fulcrum 52a. Further, as shown in Fig. 11, the engagement portion 49c is guided radially outward over the cam surface 46a (third position P3) and the projecting portion 53 passes over the off-spring 52 to move to a radial direction outer edge portion of the through hole 46d.

As soon as the projecting portion 53 passes over the off-spring 52, the off-spring 52 returns to its initial position. Hence, when the engagement portion 49c of the pawl 49 attempts to move back to the engaged state after the pretensioner 16 is operated, the off-spring 52 does not deflect about the deformation fulcrum 52b to a sufficient extent for the pawl 49 to pass, and therefore the pawl 49 is supported as is. As a result, the engagement portion 49c of the pawl 49 is prevented from meshing with the external teeth 50a of the latch ring 50 again.

According to the seat belt retractor 10 described above, the clutch 61 includes the latch ring 50, the pawl 49, and the return preventing mechanism constituted by the off-spring 52 and the projecting portion 53. The latch ring 50 rotates together with the spindle 161 and includes the external teeth 50a on its outer peripheral surface. The pawl 49 includes the engagement portion 49c that is capable of engaging with the external teeth 50a of the latch ring 50, and is capable of rotating such that the engagement portion 49c moves to the first position P1 when the motor 34 is not operative, moves to the second position P2 in which the engagement portion 49c engages with the external teeth 50a of the latch ring 50 when the motor 34 is operated, and moves to the third position P3 on the opposite side of the first position P1 to the second position P2 in the radial direction when the pretensioner 16 is operated. The return preventing mechanism prevents the pawl 49 from returning to the first position P1 and the second position P2 after the pawl 49 has moved to the third position P3. Thus, a reliable clutch operation during which the engagement portion 49c of the pawl 49 does not re-engage with the external teeth 50a of the latch ring 50 after the pretensioner 16 is operated can be achieved using a small number of components.

Further, the inner peripheral surface of the ring-shaped friction spring 42 biased in a rotary axis center direction of the spindle assembly 12 is held by the convex portion 25a of the lower cover 25, and therefore the friction spring 42 is held by a simple constitution while applying frictional force. With this constitution, when the power of the motor 34 begins to be transmitted in the seat belt retraction direction, the pawl rotary shaft 48 is moved in an opposite direction relative to the seat belt retraction direction by the friction spring 42 held on the convex portion 25a of the lower cover 25 by the biasing force.

## Claims

1. A seat belt retractor (10) comprising:
a spindle (12) for retracting a seat belt;
an electric actuator (18) that generates a power for rotating the spindle (12);
an explosive pretensioner (16) that acts on the spindle (12) to retract the seat belt; and
a power transmission mechanism (19) that is capable of transmitting the power from the electric actuator to the spindle (12) and capable of blocking power transmission from the electric actuator to the spindle (12) when the pretensioner (16) is operated,
wherein the power transmission mechanism (19) comprises:
a rotary member that rotates together with the spindle (12) and has an engaged portion on a peripheral surface thereof;
an engagement member that has an engagement portion (49c) capable of engaging with the engaged portion of the rotary member and is capable of rotating such that the engagement portion (49c) moves to a first position (P1) when the electric actuator is not operative, moves to a second position (P2) in which the engagement portion (49c) engages with the engaged portion of the rotary member when the electric actuator is operated, and moves to a third position (P3) on an opposite side of the first position (P1) to the second position (P2) in a radial direction when the pretensioner (16) is operated; and
a return preventing mechanism that prevents the engagement portion (49c) from returning to the first position (P1) and the second position (P2) after moving to the third position, (P3).
**characterized in that** the return preventing mechanism comprises:
a projecting portion (53) provided on the engagement member; and
a spring member (52) which, when the pretensioner (16) is operated such that the engagement portion (49c) moves from the second position (P2) past the first position (P1) to the third position (P3), is elastically deformed by the projecting portion (53) of the engagement member when the engagement member passes the first position (P1) and elastically returned When the engagement portion moves to the third position (P3).

2. The seat belt retractor (10) according to claim 1, **characterized in that** the power transmission mechanism (19) comprises:
a final gear (47) that is rotated by the power from the electric actuator (18);
a plate member fixed to the final gear (47);
a guide portion provided on the plate member to guide rotation of the engagement member;
an engagement member rotary shaft that holds the engagement member rotatably; and
an engagement member holder that engages the engagement member rotary shaft rotatably and is held on a non-driven part of a case member by a biasing force thereof so as to be capable of holding the engagement member,
the projecting portion (53) is provided on an opposite side face of the engagement member to a side face on which the engagement member rotary shaft is provided,
a through hole through which the projecting portion (53) projects is formed in the plate member and has a length that allows the projecting portion (53) to move when the engagement portion (49c) rotates between the second position (P2) and the third position (P3), and
the spring member is attached to the plate member such that a tip end portion thereof opposes the through hole when seen from an axial direction, whereby the spring member is capable of contacting the projecting portion (53) when the engagement portion (49c) moves from the first position (P1) to the third position (P3).

3. The seat belt retractor (10) according to claim 2, **characterized in that** when the power of the electric actuator (18) begins to be transmitted in a direction for retracting the seat belt, the engagement member rotary shaft is moved in an opposite direction relative to the direction for retracting the seat belt by the engagement member holder held on the non-driven part of the case member by the biasing force.

## Patentansprüche

1. Sicherheitsgurtaufroller (10), umfassend:
eine Spindel (12) zum Aufrollen eines Sicherheitsgurts;
ein elektrisches Stellglied (18), das eine Kraft zum Drehen der Spindel (12) erzeugt;
einen explosiven Gurtstraffer (16), der auf die Spindel (12) einwirkt, um den Sicherheitsgurt aufzurollen; und
einen Kraftübertragungsmechanismus (19), der in der Lage ist, die Kraft von dem elektrischen Stellglied auf die Spindel (12) zu übertragen und in der Lage ist, bei Betätigung des Gurtstraffers (16) die Kraftübertragung von dem elektrischen Stellglied auf die Spindel (12) zu blockieren,
wobei der Kraftübertragungsmechanismus (19) Folgendes umfasst:
ein Drehelement, das sich gemeinsam mit der Spindel (12) dreht und einen in Eingriff befindlichen Abschnitt an einer Umfangsfläche davon aufweist;
ein Eingriffselement, das einen Eingriffsabschnitt (49c) aufweist, der in der Lage ist, mit dem in Eingriff befindlichen Abschnitt des Drehelements in Eingriff zu gelangen und in der Lage ist, sich so zu drehen, dass sich der Eingriffsabschnitt (49c) in eine erste Position (P1) bewegt, wenn das elektrische Stellglied nicht in Betrieb ist, sich in eine zweite Position (P2) bewegt, in der der Eingriffsabschnitt (49c) mit dem in Eingriff befindlichen Abschnitt des Drehelements in Eingriff gelangt, wenn das elektrische Stellglied betrieben wird, und sich in eine dritte Position (P3) auf einer Seite der ersten Position (P1) gegenüber der zweiten Position (P2) in einer radialen Richtung bewegt, wenn der Gurtstraffer (16) betätigt wird; und
einen Rückkehrverhinderungsmechanismus, der verhindert, dass das Eingriffselement (49c) in die erste Stellung (P1) und die zweite Stellung (P2) zurückkehrt, nachdem es sich in die dritte Stellung (P3) bewegt hat,
**dadurch gekennzeichnet, dass** der Rückkehrverhinderungsmechanismus Folgendes umfasst:
einen vorstehenden Abschnitt (53), der an dem Eingriffselement vorgesehen ist; und
ein Federelement (52), das, wenn der Gurtstraffer (16) betätigt wird, sodass sich der Eingriffsabschnitt (49c) aus der zweiten Position (P2) an der ersten Position (P1) vorbei in die dritte Position (P3) bewegt, von dem vorstehenden Abschnitt (53) des Eingriffselements elastisch verformt wird, wenn das Eingriffselement sich an der ersten Position (P1) vorbeibewegt, und elastisch zurückgeführt wird, wenn sich der Eingriffsabschnitt in die dritte Position (P3) bewegt.

2. Sicherheitsgurtaufroller (10) nach Anspruch 1, **dadurch gekennzeichnet, dass** der Kraftübertragungsmechanismus (19) Folgendes umfasst:
ein letztes Zahnrad (47), das durch die Kraft von dem elektrischen Stellglied (18) gedreht wird;
ein Plattenelement, das an dem letzten Zahnrad (47) befestigt ist;
einen Führungsabschnitt, der an dem Plattenelement zum Führen der Drehung des Eingriffselements angeordnet ist;
eine Eingriffselement-Drehachse, die das Eingriffselement drehbar hält; und
einen Eingriffselementhalter, der drehbar mit der Eingriffselement-Drehachse in Eingriff gelangt und an einem nicht angetriebenen Teil eines Gehäuseelements von einer Vorspannkraft davon gehalten wird, damit es in der Lage ist, das Eingriffselement zu halten,
der vorstehende Abschnitt (53) ist an einer Seitenfläche des Eingriffselements gegenüber einer Seitenfläche angeordnet, an der die Eingriffselement-Drehachse angeordnet ist,
eine Durchgangsbohrung, durch die der vorstehende Abschnitt (53) ragt, ist in dem Plattenelement geformt und weist eine Länge auf, die ermöglicht, dass sich der vorstehende Abschnitt (53) bewegt, wenn sich der Eingriffsabschnitt (49c) zwischen der zweiten Position (P2) und der dritten Position (P3) dreht, und
das Federelement ist an dem Plattenelement derart befestigt, dass ein Spitzenendabschnitt davon aus axialer Richtung betrachtet der Durchgangsbohrung gegenüberliegt, wodurch das Federelement in der Lage ist, den vorstehenden Abschnitt (53) zu berühren, wenn sich der Eingriffsabschnitt (49c) aus der ersten Position (P1) in die dritte Position (P3) bewegt.

3. Sicherheitsgurtaufroller (10) nach Anspruch 2, **dadurch gekennzeichnet, dass** bei Beginn der Übertragung der Kraft des elektrischen Stellglieds (18) in einer Richtung zum Aufrollen des Sicherheitsgurts die Eingriffselement-Drehachse in einer entgegengesetzten Richtung bezogen auf die Richtung zum Aufrollen des Sicherheitsgurts von dem Eingriffselementhalter bewegt wird, der von der Vorspannkraft an dem nicht angetriebenen Teil des Gehäuseelements gehalten ist.

## Revendications

1. Rétracteur de ceinture de sécurité (10) comprenant :
un axe (12) destiné à rétracter une ceinture de sécurité ;
un actionneur électrique (18) qui génère une force pour faire tourner l'axe (12) ;
un prétendeur explosif (16) qui agit sur l'axe (12) pour rétracter la ceinture de sécurité ; et
un mécanisme de transmission de force (19) qui est capable de transmettre la force de l'actionneur électrique à l'axe (12) et capable de bloquer la transmission de force de l'actionneur électrique à l'axe (12) quand le prétendeur (16) est actionné,
dans lequel le mécanisme de transmission de force (19) comprend :
un élément rotatif qui tourne conjointement avec l'axe (12) et comporte une partie en prise sur une surface périphérique de celui-ci ;
un élément de prise qui comporte une partie de prise (49c) capable de venir en prise avec la partie en prise de l'élément rotatif et capable de tourner de sorte que la partie de prise (49c) se déplace dans une première position (P1) quand l'actionneur électrique n'est pas fonctionnel, se déplace dans une seconde position (P2) dans laquelle la partie de prise (49c) vient en prise avec la partie en prise de l'élément rotatif quand l'actionneur électrique est actionné, et se déplace dans une troisième position (P3) d'un côté de la première position (P1) opposé à la seconde position (P2) dans une direction radiale quand le prétendeur (16) est actionné ; et
un mécanisme anti-retour qui empêche l'élément de prise (49c) de revenir à la première position (P1) et à la seconde position (P2) après s'être déplacé dans la troisième position (P3),
**caractérisé en ce que** le mécanisme anti-retour comprend :
une partie saillante (53) située sur l'élément de prise ; et
un élément de ressort (52) qui, quand le prétendeur (16) est actionné de sorte que la partie de prise (49c) se déplace de la seconde position (P2) au-delà de la première position (P1) vers la troisième position (P3), est déformé élastiquement par la partie saillante (53) de l'élément de prise quand l'élément de prise passe devant la première position (P1), et est ramené élastiquement quand la partie de prise se déplace dans la troisième position (P3).

2. Rétracteur de ceinture de sécurité (10) selon la revendication 1, **caractérisé en ce que** le mécanisme de transmission de force (19) comprend :
une roue dentée finale (47) qui est tournée par la force provenant de l'actionneur électrique (18) ;
un élément de plaque fixé à la roue dentée finale (47) ;
une partie de guidage située sur l'élément de plaque pour guider la rotation de l'élément de prise ;
un arbre rotatif d'élément de prise qui maintient l'élément de prise de manière rotative ; et
un organe de retenue d'élément de prise qui vient en prise avec l'arbre rotatif d'élément de prise de manière rotative et qui est maintenu sur une partie non entraînée d'un élément de boîtier par une force de précontrainte de celui-ci de façon à être capable de retenir l'élément de prise,
la partie saillante (53) est située sur une face latérale de l'élément de prise opposée à une face latérale sur laquelle l'arbre rotatif d'élément de prise est situé,
un trou débouchant à travers lequel la partie saillante (53) fait saillie est formé dans l'élément de plaque et présente une longueur qui permet à la partie saillante (53) de se déplacer quand la partie de prise (49c) tourne entre la seconde position (P2) et la troisième position (P3), et
l'élément de ressort est fixé à l'élément de plaque de sorte qu'une partie d'extrémité pointue de celui-ci est opposée au trou débouchant, vu dans une direction axiale, ce par quoi l'élément de ressort est capable de toucher la partie saillante (53) quand la partie de prise (49c) se déplace de la première position (P1) à la troisième position (P3).

3. Rétracteur de ceinture de sécurité (10) selon la revendication 2, **caractérisé en ce que**, quand la force de l'actionneur électrique (18) commence à être transmise dans une direction pour rétracter la ceinture de sécurité, l'arbre rotatif d'élément de prise est déplacé dans une direction opposée par rapport à la direction pour rétracter la ceinture de sécurité par l'organe de retenue d'élément de prise maintenu par la force de précontrainte sur la partie non entraînée de l'élément de boîtier.
